# EUROPEAN PATENT APPLICATION

(11) **EP 0 604 692 A1**
(43) Date of publication of application: **06.07.1994**
(21) Application number: 92311893.9
(22) Date of filing: 31.12.1992
(51) Int. Cl.: C04B 38/02

(54) **Flooring material**

(71) Applicant: INAX CORPORATION, Tokoname-Shi, Aichi 479 (JP)
(72) Inventor: Kitahara, Shoji, Tokoname-Shi, Aichi (JP); Hibi, Masakazu, Tokoname-Shi, Aichi (JP); Koyama, Akihisa, Tokoname-Shi, Aichi (JP)
(74) Representative: Cockbain, Julian Roderick Michaelson

(57) **Abstract**

Composite flooring tiles with good heat-insulation, negligible water absorption and good mechanical strength may be produced containing regions of non-cellular and cellular materials. The wear surface is wholly or partly formed from the cellular material and is abraded to provide a non-slip surface.

## Description

The present invention relates to a cellular building material and a process for the production thereof. More particularly, the present invention relates to a cellular material having good heat insulating properties, negligible water absorption, a non-slip surface, high dimensional accuracy, and good mechanical strength, making the material suitable for use as a building material and in particular as a flooring material.

The present invention further relates to a light-weight cellular material, and a process for the production thereof. Such a material has good heat insulating properties, negligible water absorption, a non-slip surface, an appearance which does not show stains, and the ability to retain its good appearance for a long period of time. This material, especially in tile form, is particularly suitable for use as a surface covering and particularly a floor covering material.

Conventional types of inorganic cellular materials include those made of volcanic glass (as disclosed in Japanese Patent Publication No. 28847/1988), those made of expansible shale, loam, expansible clay, clay, china clay, Shirasu, fly ash, ferroalloy, or the like (as disclosed in Japanese Patent Publication Nos. 30834/1982 and 13408/1982), those made of blast furnace granulated slag (as disclosed in Japanese Patent Laid-open Nos. 109857/1981, 109858/1981, 109859/1981 and 17459/1982), and those made of glass foam (as disclosed in Japanese Patent Laid-open Nos. 207743/1987, 212245/1987, 218126/1987, 233019/1988, 233020/1988, and 233021/1988). However, with the exception of the glass foam materials, each of these materials has such high water absorption that it cannot provide a feasible alternative to conventional bathroom flooring materials such as glazed or unglazed ceramic files, which are slippery, of a high density and feel cold and uncomfortable in winter. On the other hand, the foam glass materials pose a problem in having a slippery surface.

Cellular (or foamed) building materials and indeed building materials in general which have a rough surface are liable to staining and cannot easily be cleaned once they become stained. This holds true particularly for light-coloured building materials.

Accordingly, one objective of the present invention is to provide a cellular building material having good heat insulating properties, negligible water absorption, a non-slip surface, high dimensional accuracy, and good mechanical strength. It is a further objective of the present invention to provide a material having an appearance which does not show stains and which can retain its good appearance for a long period of time.

Thus, viewed from a first aspect the present invention provides a composite tile comprising at least one region of a cellular material and at least one region of a non-cellular material wherein at least part of a major surface of said tile is provided by said cellular material, wherein the exposed surface of said cellular material on said major surface is abraded, and wherein said cellular material comprises clay and feldspar.

The word "tile" as used herein covers all configurations suitable for surface covering building elements, such as plates, discs, blocks, etc. and covers elements having non-planar exposed surfaces (the "wear" surfaces), as well as those with planar wear surfaces.

The tiles of the invention have the wear surface abraded, e.g. ground or polished.

Viewed from a second aspect the invention also provides a process for producing the tiles of the invention comprising: forming a structure comprising at least one region of a foamable mixture and at least one region of a non-foamable hardenable material, said foamable mixture comprising clay, feldspar and a gas-generating agent; sintering said structure to provide a sintered structure having a major surface at least partly provided by a cellular material formed from said foamable mixture; and abrading said major surface.

The foamable material used according to the present invention is preferably formed from 60 to 10 parts by weight of clay, 40 to 90 parts by weight of feldspar, and less than 2 parts by weight of the gas-generating agent. When foamed it is light in weight and composed of closed cells, with negligible water absorption. Upon grinding or polishing, the surface of the foamed layer becomes rough and non-slippery because cut cells are exposed. The ground or polished surface remains non-slippery even when it becomes wet, because it does not permit water to spread uniformly thereon. Moreover, it easily dries owing to its large specific surface area.

In the tiles of the invention the poor dimensional accuracy and low strength of the cellular material is compensated for by the non-cellular material and thus the resulting composite structure has good dimensional accuracy and high strength.

In one particularly preferred embodiment, the tiles of the invention are laminar with a non-cellular base layer and a cellular surface layer (and optionally with further layers). These may be produced by laminating the foamable mixture and the non-foamable hardenable material, e.g. within a mould, and then sintering and abrading the laminate.

In a further preferred embodiment the wear surface of the tile comprises regions of non-cellular material as well as regions of cellular material. These can be randomly arranged, e.g. as a result of mixing a granular foamable mixture with a granular non-foamable hardenable material, or regularly arranged with well defined segments of cellular and non-cellular material, e.g. by patterned disposition of the two materials within the mould. Moreover such tiles can if desired be provided with a cellular or non-cellular base layer.

The porous surface of the cellular segments is subject to staining and it is difficult to remove stains from the surface once it becomes stained. In order to overcome this disadvantage, a dark-colour may be imparted to the cellular material of the wear surface of the tiles, e.g. by inclusion of a dark-colour pigment in the foamable mixture. The resultant tiles do not show stains. On the other hand, any non-cellular segments in the wear surface may be light in colour relative to the cellular segments so that the tile as a whole looks light and beautiful.

The foamable mixture used for making the tiles of the present invention comprises clay, feldspar, and a gas-evolving component. The clay used is preferably one which does not expand during sintering. The feldspar is not specifically limited. Suitable gas-evolving components which may be used include silicon carbide and silicon nitride. These are preferably in the form of a fine powder having a particle diameter of less than 10 µm.

The dark-coloured pigments which may be incorporated within the foamable mixture include for example, black, brown, grey, violet, dark green, or dark blue pigments. The selection of pigment is preferably such that the resulting cellular material takes on a colour similar to that of the stain which is most probably during use.

The foamable mixture used according to the present invention preferably comprises 60 to 10 parts by weight of clay and 40 to 90 parts by weight of feldspar. If the feldspar is present in an amount less than that specified above, the resulting material may have a high water absorption because the matrix forming closed cells is not sufficiently compact. Conversely, if the feldspar is present in an amount greater than that specified above, the sintering temperature is lowered, which has an adverse effect on the dimensional accuracy of the finished product. Moreover, for the laminar tiles with non-cellular base layers and cellular surface layers, if feldspar is present in an excessive amount, it gives rise to open cells, which lead to high water absorption by the tiles.

The gas-evolving component is preferably present in an amount of from 0.01 to 2.0 parts by weight. If it is used in an amount greater than this, the resulting cellular layer may be of open-cell structure, which leads to high water absorption and low mechanical strength. Moreover, being expensive, this component should be used sparingly.

The dark coloured pigment is preferably used in an amount of less than 5 parts by weight according to the depth of colour which is required. This clearly depends upon the application in which the cellular building material is used.

The non-foamable hardenable material used to make the tiles of the invention is not specifically limited. It may for example have the same composition as the foamable mixture excluding the gas-evolving component and, if desired, the dark-coloured pigment. Where the wear surface of the tiles includes non-cellular regions, the non-foamable hardenable material may contain a light-coloured pigment similar or dissimilar to the dark-coloured pigments mentioned above.

For the production of laminar tiles with cellular wear surfaces, the cellular and non-cellular materials may be prepared in the usual way by mixing the components of each layer in the appropriate ratio. The two materials are then molded into the layered structure. (The amount of the foamable material should preferably be 3 to 50 parts by weight and that of the non-foamable material should preferably be 50 to 97 parts by weight.) The molding is subsequently sintered to form a product comprising a cellular layer and a non-cellular layer. The sintering temperature varies depending on the formulation and materials used. It is selected from a temperature range in which the gas-evolving component decomposes to evolve a gas which produces the desired cellular material. Sintering causes the silicon carbide to decompose, evolving carbon dioxide gas which forms cells in the cellular layer. With a sintering temperature lower than 1000°C, the foamable material is generally too viscous to form cells. With a sintering temperature higher than 1300°C, the foamable material generally has such a low viscosity as to permit the coalescence of cells, leading to coarse cells and a weak cellular layer. In the case where silicon carbide is used as the gas-evolving component in combination with clay and feldspar, the preferred sintering temperature is 1000 to 1300°C.

The above-mentioned process generally yields a laminated product comprising at least two layers, i.e. a non-cellular layer and a cellular layer, the latter preferably being composed of closed-cells (about 20-200 µm in diameter), having a water absorption lower than 3% (cold water as well as boiling water over a period of 24 hours), and a specific gravity of 1.0 to 2.0.

The thus obtained laminated sintered product is finished by grinding or polishing the surface of the foamed layer in a conventional manner. The grinding or polishing is preferably carried out in such a way as to remove the surface skin (0.5-2.00 mm in thickness) from the cellular layer.

For such non-cellular based and cellular surfaced tiles, the surface and base layers are preferably 1.0 to 5.0 mm and 5 to 30 mm thick respectively, so that the cellular material has satisfactory dimensional accuracy and strength.

Where the tiles are produced with cellular and non-cellular regions in the wear surface, the cellular and non-cellular materials may be prepared in the usual way by mixing the constituents in the appropriate ratio. The two materials are then granulated by using a spray drier or the like. (Granulation may also be accomplished by mixing and forming the constituents into lumps by wet process and crushing the lumps after drying.) The granules should preferably be 0.5 to 2 mm in diameter. The two granular materials are mixed and molded. The molding is subsequently sintered. The sintering temperature varies as discussed above.

This process yields a composite cellular product composed of cellular and non-cellular segments, the former preferably being composed of closed-cells (about 20-200 µm in diameter), having a water absorption lower than 3% (cold water as well as boiling water over a period of 24 hours), and a specific gravity of 1.0-2.0. The product is finally finished by grinding or polishing the wear surface as discussed above.

The tiles produced in this way are preferably composed of 3-50 vol% cellular segments and 50-97 vol% non-cellular segments. The ratio of cellular to non-cellular segments is preferably such that the cellular segments fully produce the non-slipping and weight-reducing effects required for the desired end use of the tiles. This is generally achieved with a weight ratio of non-cellular material to cellular material of from 20/80 to 80/20.

The tiles with mixed cellular/non-cellular wear surfaces may also be constructed by backing the sintered layer composed of cellular segments and non-cellular segments with a base layer of cellular or non-cellular structure. This construction may be achieved preparing a laminate of the molding material of the above-mentioned mixture and the molding material for the base layer.

According to the present invention, the cellular and non-cellular materials may optionally incorporate additional substances such as alkali metal oxides and alkaline earth metal oxides and any substances containing them, for example limestone, Dolomite, glass, and talc. Such substances can be used to lower the sintering temperature of the material and control the cell size of the foamed layer. The amount of limestone should generally be less than 20 parts by weight, preferably less than 10 parts by weight, per 100 parts by weight of clay and feldspar in total. Examples of other additional substances which may also be used include agalmatolite, porcelain stone, alumina (aluminium oxide), silica stone, and highly refractory chamotte, which raise the sintering temperature thereby improving the refractoriness of the sintered body produced. For these, the amount used should generally be less than 20 parts by weight for 100 parts by weight of clay and feldspar in total.

The laminar tiles of the invention with non-cellular base and cellular surface layers have the following features:
(1) minute irregularities on the wear surface, which prevent the surface from becoming slippery when wet;
(2) a fast-drying wear surface;
(3) a non-cellular base layer which contributes to high mechanical strength and dimensional accuracy;
(4) a porous surface layer which contributes to good heat insulating properties;
(5) a warm touch to the sole of the foot owing to good heat insulating properties; and
(6) a low water absorption and good resistance to freezing owing to the closed cell structure of the surface layer.

The tiles of the invention with a mixed cellular/non-cellular wear surface have the following features:
(1) comparatively light weight owing to the cellular segments;
(2) good heat insulating properties owing to the cellular segments of porous structure;
(3) a warm touch to the sole of the foot owing to good heat insulating properties;
(4) a low water absorption and good resistance to freezing owing to the closed cell structure in the foamed segments;
(5) minute irregularities on the surface, which prevent the wear surface from becoming slippery when wet;
(6) a fast-drying wear surface;
(7) where the cellular material is dark pigmented, a dark coloured cellular layer which does not show stains;
(8) non-cellular segments which contribute to high mechanical strength and dimensional accuracy; and
(9) where the non-cellular material is relatively light coloured, a light-coloured appearance (as a flooring material) which lightens the room.

The present invention will now be described in more detail by way of the following non-limiting Examples.

### Example 1

Foamable and non-foamable materials were prepared from the following constituents by crushing and mixing (in a wet ball mill for 24 hours), dehydration and drying, and cake crushing.
· Foamable material:

| | |
|---|---|
| Clay ("Kawamotokibushi") | 30 parts by weight |
| Feldspar ("Asan Choseki") | 70 parts by weight |
| Silicon carbide (average particle diameter: 5 µm) | 0.3 parts by weight |

· Non-foamable material:

| | |
|---|---|
| Clay ("Kawamotokibushi") | 30 parts by weight |
| Feldspar ("Asan Choseki") | 70 parts by weight |

The foamable and non-foamable materials were placed one on top of the other and formed into a plate (measuring 20 x 20 x 1 cm) by dry pressing.

After drying, the plate was sintered at 1250°C for 1 hour to give a flat sintered body, which was subsequently ground on a grinding machine to remove the surface of the foamed layer up to a depth of 0.5 mm. A flooring tile was thus obtained.

This flooring tile was composed of foamed and non-foamed layers whose thicknesses and characteristic properties are shown in Table 1 below.

The wear surface of the tile had minute irregularities due to cut pores, and hence it was non-slippery in the dry state and remained non-slippery when wet.

### Example 2

The procedure of Example 1 was repeated to prepare a flooring tile, except that the following constituents were used:
· Foamable material:

| | |
|---|---|
| Clay ("Onadakibushi") | 20 parts by weight |
| Feldspar ("Kumoi Choseki") | 80 parts by weight |
| Silicon carbide (average particle diameter: 5 µm) | 0.2 parts by weight |

· Non-foamable material:

| | |
|---|---|
| Clay ("Onadakibushi") | 20 parts by weight |
| Feldspar ("Kumoi Choseki") | 80 parts by weight |

The resulting flooring tile was composed of foamed and non-foamed layers whose thicknesses and characteristic properties are shown in Table 1 below. The wear surface of this tile was non-slippery.

### Example 3

The procedure of Example 1 was repeated to prepare a flooring tile, except that 3 parts by weight of talc were added to both the foamable and non-foamable materials and the sintering temperature was changed to 1140°C.

The resulting flooring tile was composed of foamed and non-foamed layers whose thicknesses and characteristic properties are shown in Table 1 below. The wear surface of this tile was non-slippery.

### Example 4 (Comparative)

The procedure of Example 1 was repeated to prepare a flooring tile material, except that the non-foamable material was not used.

The resulting flooring tile had the characteristic properties as shown in Table 1 below.

**Table 1**

| | | | | | |
|---|---|---|---|---|---|
| Example No. | | 1 | 2 | 3 | (4) |
| Thickness of foamed layer (mm) | | 3 | 3 | 3 | 10 |
| Thickness of non-foamed layer (mm) | | 20 | 20 | 20 | 0 |
| Foamed Layer | Bulk density | 1.6 | 1.8 | 1.4 | 1.6 |
| | 24-hr water absorption (%) | less than 3 | less than 3 | less than 3 | less than 3 |
| | Boiling water absorption (%) | less than 3 | less than 3 | less than 3 | less than 3 |
| Bulk density of non-foamed layer | | 2.3 | 2.3 | 2.3 | - |
| Flexural strength (N/cm²) | | 50 | 50 | 50 | 25 |

It may be seen from Table 1 that the tiles of Examples 1 to 3 are comparable to that of Comparative Example 4 in the water absorption of the foamed layer and the non-slipperiness of the surface, whereas the former are by far superior in strength to the latter owing to the presence of the non-foamed layer. In addition, the tiles of Examples 1 to 3 have such good dimensional accuracy that they hardly need post-treatment for size adjustment.

Laminar tiles such as those of Examples 1 to 3 may of course include further layers between the base and surface layers.

### Example 5

A foamable material (having an average particle diameter of 1 mm) and a non-foamable material were prepared from the following constituents by crushing and mixing (in a wet ball mill for 24 hours), dehydration and drying, and cake crushing.
· Foamable material:

| | |
|---|---|
| Clay ("Kawamotokibushi") | 30 parts by weight |
| Feldspar ("Asan Choseki") | 70 parts by weight |
| Silicon carbide (average particle diameter: 3 µm) | 0.1 parts by weight |
| Grey pigment | 3 parts by weight |

· Non-foamable material:

| | |
|---|---|
| Clay ("Kawamotokibushi") | 30 parts by weight |
| Feldspar ("Asan Choseki") | 70 parts by weight |

The foamable and non-foamable materials were then mixed in the ratio shown in Table 2 below, and the mixture was formed into a plate (measuring 20 x 20 x 1 cm) by dry pressing.

After drying, the plate was sintered at 1250°C for 1 hour to give a flat sintered body, which was subsequently ground on a grinding machine to remove the surface layer up to a depth of 0.5 mm. A foamed flooring tile was thus obtained.

This flooring tile has the characteristic properties as shown in Table 2 below.

The surface of the foamed segments has minute irregularities due to cut pores, and hence it is non-slippery in the dry state and remains non-slippery when wet. In addition, the surface of the foamed segments takes on a greyish colour and hence does not show stains.

### Example 6

The procedure of Example 5 was repeated to prepare a foamed flooring tile, except that the following constituents were used:
· Foamable material:

| | |
|---|---|
| Clay ("Nonadakibushi") | 20 parts by weight |
| Feldspar ("Kumoi Choseki") | 80 parts by weight |
| Silicon carbide (average particle diameter: 3 µm) | 0.05 parts by weight |
| Black pigment | 3 parts by weight |

· Non-foamable material:

| | |
|---|---|
| Clay ("Nonadakibushi") | 20 parts by weight |
| Feldspar ("Kumoi Choseki") | 80 parts by weight |

This flooring tile has the characteristic properties as shown in Table 2 below. In addition, it is non-slippery and the surface of the foamed segments takes on a blackish-grey colour and hence does not show stains.

**Table 2**

| | | | |
|---|---|---|---|
| Example No. | | 5 | 6 |
| Mixing ratio | Foamable material (pbw) | 40 | 30 |
| | Non-foamable material (pbw) | 60 | 70 |
| Foamed flooring tile | Foamed segments (vol%) | 40 | 30 |
| | Non-foamed segments (vol%) | 60 | 70 |
| Bulk density | | 1.8 | 1.7 |
| 24-hr water absorption (%) | | not more than 1 | not more than 1 |
| Boiling water absorption (%) | | not more than 3 | not more than 3 |
| Flexural strength (N/cm²) | | 33 | 30 |
| (pbw = parts by weight) | | | |

The tiles of the present invention may be used for example as flooring materials for bathrooms, swimming pools, and other surfaces subject to wetting.

## Claims

1. A composite tile comprising at least one region of a cellular material and at least one region of a non-cellular material wherein at least part of a major surface of said tile is provided by said cellular material, wherein the exposed surface of said cellular material on said major surface is abraded, and wherein said cellular material comprises clay and feldspar.

2. A tile as claimed in claim 1 wherein said cellular material has a mean cell diameter in the range 20-200 µm and a specific gravity of 1.0 to 2.0.

3. A tile as claimed in claim 2 wherein said cellular material has a water absorption of less than 3%.

4. A tile as claimed in any one of claims 1 to 3 wherein said cellular material further comprises a dark pigment.

5. A laminar tile as claimed in any one of claims 1 to 4 comprising a base layer of said non-cellular material and a surface layer of said cellular material.

6. A tile as claimed in claim 5 wherein said base layer is 5 to 30 mm thick and said surface layer is 1.0 to 5.0 mm thick.

7. A tile as claimed in any one of claims 1 to 4 wherein said major surface comprises regions of said cellular material and regions of said non-cellular material.

8. A tile as claimed in claim 7 wherein said cellular material contains a dark pigment and is darker coloured than said non-cellular material.

9. A tile as claimed in either of claims 7 and 8 wherein said cellular material is 3 to 50% by volume and said non-cellular material is 50 to 97% by volume.

10. A tile as claimed in any one of claims 7 to 9 further comprising a base layer of a cellular material.

11. A tile as claimed in any one of claims 7 to 9 further comprising a base layer of a said non-cellular material.

12. A process for producing a composite tile said process comprising: forming a structure comprising at least one region of a foamable mixture and at least one region of a non-foamable hardenable material, said foamable mixture comprising clay, feldspar and a gas-generating agent; sintering said structure to provide a sintered structure having a major surface at least partly provided by a cellular material formed from said foamable mixture; and abrading said major surface.

13. A process as claimed in claim 12 wherein said foamable mixture comprises 60 to 10 parts by weight of clay, 40 to 90 parts by weight of feldspar and less than 2 parts by weight of said gas generating agent.

14. A process as claimed in either of claims 12 and 13 wherein said gas generating agent comprises silicon carbide having a mean particle diameter of less than 10 µm.

15. A process as claimed in any one of claims 12 to 14 wherein said hardenable material comprises 60 to 10 parts by weight of clay and 40 to 90 parts by weight of feldspar.

16. A process as claimed in any one of claims 12 to 15 wherein sintering is effected at 1000 to 1300°C.

17. A process as claimed in any one of claims 12 to 16 wherein abrading is effected by grinding or polishing to a depth of 0.5 to 2.0 mm.

18. A process as claimed in any one of claims 12 to 17 wherein said foamable mixture further comprises up to 5 parts by weight of a dark-coloured pigment.

19. A process as claimed in any one of claims 12 to 18 wherein a laminar structure is formed comprising an external layer of 3 to 50 parts by weight of said foamable mixture and a further external layer of 50 to 97 parts by weight of said non-foamable material.

20. A process as claimed in any one of claims 12 to 18 wherein a structure is formed by mixing 20 to 80 parts by weight of granules of said non-foamable material and 80 to 20 parts by weight of granules of said foamable mixture.
